# EUROPÄISCHE PATENTSCHRIFT

(11) **EP 2 345 812 B1**
(45) Veröffentlichungstag und Bekanntmachung des Hinweises auf die Patenterteilung: **29.07.2015**
(21) Anmeldenummer: 10191133.7
(22) Anmeldetag: 15.11.2010
(51) Int. Cl.: F03D 1/06, F01D 5/28, F03D 1/00, F03D 11/00

(54) **Bor basierte Hartstoffbeschichtung einer Windkraftanlagenkomponente**
Boron-based hard coating of a wind power assembly component
Revêtement de matière solide à base de bore pour un composant d'éolienne

(30) Priorität: 14.01.2010 DE 102010004662
(43) Veröffentlichungstag der Anmeldung: 20.07.2011
(73) Patentinhaber: Siemens Aktiengesellschaft, 80333 München (DE)
(72) Erfinder: Hohle, Andreas Christian, 52477, Alsdorf (DE); Hohmann, Christian, 45473, Mülheim an der Ruhr (DE); Kummer, Claudia, 52066, Aachen (DE); Kölpin, Helmut, 52499, Baesweiler (DE); Li, Ying, 52070, Aachen (DE); Tchemtchoua, Brice, 52070, Aachen (DE)

(56) Entgegenhaltungen:
- EP-A1- 1 935 509
- EP-A2- 2 189 672
- DE-A1- 10 309 383
- DE-A1-102007 014 861
- US-A1- 2005 208 218
- US-A1- 2007 197 407

## Beschreibung

Die vorliegende Erfindung betrifft eine Windkraftanlage, einen Windpark und ein Verfahren zum Verbessern einer Eigenschaft einer Oberfläche einer Komponente einer Windkraftanlage.

Zur Sicherstellung der erwarteten Lebensdauer von Windkraftanlagen gilt es den Verschleiß der in ihnen verbauten mechanischen Komponenten zu reduzieren. Gleichzeitig gilt es unter dem Aspekt der Wirtschaftlichkeit den Wirkungsgrad der Anlagen zu verbessern.

In dem Dokument EP 1 935 509 A1 wird eine Windturbinenkomponente mit einer schmutzabweisenden Oberfläche beschrieben.

In dem Dokument DE 10 2007 014 861 A1 ist eine Verbindung von Bauteilen einer Windenergieanlage beschrieben. Dabei sind zwischen einem ersten Bauteil und einem zweiten Bauteil der Windenergieanlage mehrere Verbindungszwischenkörper angeordnet, wobei auf wenigstens einer Kontaktfläche der Verbindungszwischenkörper eine Beschichtung vorgesehen ist. Dabei wirkt die wenigstens eine beschichtete Kontaktfläche des Verbindungszwischenkörpers bei der Ausbildung der Verbindung reibwerterhöhend.

Bisher werden in Windkraftanlagen thermische Härteverfahren und modifizierte Schmierstoffe eingesetzt, um den Verschleiß, insbesondere der mechanischen Komponenten, zu minimieren oder um den Wirkungsgrad zu verbessern.

Es ist eine erste Aufgabe der vorliegenden Erfindung, eine vorteilhafte Windkraftanlage zur Verfügung zu stellen. Eine zweite Aufgabe der vorliegenden Erfindung besteht darin, einen vorteilhaften Windpark zur Verfügung zu stellen. Darüber hinaus besteht eine dritte Aufgabe der Erfindung darin, ein vorteilhaftes Verfahren zum Verbessern einer Eigenschaft einer Oberfläche einer Komponente einer Windkraftanlage zur Verfügung zu stellen.

Die erste Aufgabe wird durch eine Windkraftanlage nach Anspruch 1 gelöst. Die zweite Aufgabe wird durch einen Windpark nach Anspruch 7 gelöst. Die dritte Aufgabe wird durch ein Verfahren zum Verbessern einer Eigenschaft einer Oberfläche einer Komponente einer Windkraftanlage nach Anspruch 8 gelöst. Die abhängigen Ansprüche beinhalten weitere, vorteilhafte Ausgestaltungen der Erfindung.

Die erfindungsgemäße Windkraftanlage umfasst mindestens eine Komponente mit einer Oberfläche. Die Oberfläche ist zumindest teilweise mit einer Bor basierten Hartstoffschicht beschichtet. Bei der Komponente kann es sich insbesondere um eine mechanische Komponente handeln. Hartstoffschichten bieten gleichzeitig ein hohes Potential sowohl zur Verschleißminimierung, als auch zur Wirkungsgradsteigerung von relativ zueinander bewegten Teilen. Unter einer mechanischen Komponente kann im Zusammenhang mit der vorliegenden Erfindung insbesondere eine Komponente verstanden werden, die eine mechanische Funktion hat oder mechanischer Beanspruchung ausgesetzt ist.

Bor basierte Hartstoffschichten haben zusätzlich zu den allgemeinen Vorteilen von Hartstoffschichten selbstschmierende Eigenschaften. Durch die selbstschmierenden Eigenschaften der Bor basierten Hartstoffschicht wird das Notlaufverhalten der jeweiligen Komponente signifikant verbessert. Darüber hinaus wird auch das Versagensverhalten der jeweiligen Komponente verbessert. Weiterhin reagiert Bor mit freiem Wasser zu Borsäure, die als Schmierstoff wirkt und das Auftreten von freiem Wasser im Schmierstoff vermindert oder beseitigt.

Die Bor basierte Hartstoffschicht kann insbesondere Borid umfassen. Wie zuvor bereits erwähnt, hat die Beschichtung selbstschmierende Eigenschaften.

Weiterhin kann die Oberfläche der Komponente Stahl umfassen oder aus Stahl bestehen. Die Oberfläche des Stahls kann zumindest teilweise mit einer Hartstoffschicht, vorzugsweise mit einer Bor basierten Hartstoffschicht, beschichtet sein. Bei dem Stahl kann es sich um gehärteten oder ungehärteten Stahl handeln.

Bei der Komponente der Windkraftanlage kann es sich beispielsweise um einen Turm, eine Gondel, einen Rotor, eine Rotornabe, ein Rotorblatt, ein Getriebe, ein Element eines Getriebes, eine Bremse, eine Rotationsachse oder ein Element eines Generators, insbesondere ein mechanisches Element eines Generators, handeln.

Die Bor basierte Hartstoffschicht kann eine Schichtdicke zwischen 10 nm und 1000 *µ*m, vorteilhafterweise zwischen 10 nm und 10 *µ*m oder zwischen 100 *µ*m und 1000 *µ*m, aufweisen. Die Oberfläche der erfindungsgemäßen Komponente kann lediglich teilweise, aber auch vollständig mit einem Hartstoff beschichtet sein.

Zum Beispiel kann die Oberfläche ungehärteten Stahl umfassen und eine Bor reiche Substanz auf die Oberfläche aufgetragen werden. Anschließend kann eine Wärmebehandlung durchgeführt werden. Bei dieser Methode kann eine Schicht mit einer Dicke von einigen 100 *µ*m, beispielsweise zwischen 100 *µ*m und 1000 *µ*m, erzeugt werden. Alternativ dazu kann die Oberfläche gehärteten Stahl umfassen und durch physikalische Gasphasenabscheidung beschichtet werden. Bei dieser Methode kann eine Schicht mit einer Dicke zwischen 10 nm und 10 *µ*m erzeugt werden.

Grundsätzlich kann die Hartstoffbeschichtungr insbesondere die Bor basierte Hartstoffschicht auch als Korrosionsschutz für die jeweilige Komponente fungieren.

Der erfindungsgemäße Windpark umfasst mindestens eineerfindungsgemäße Windkraf tanlage. Der Windpark hat dieselben Eigenschaften und Vorteile wie die zuvor beschriebene erfindungsgemäße Windkraftanlage. Insoweit wird auf die im Zusammenhang mit der erfindungsgemäßen Windkraftanlage gemachten Ausführungen verwiesen.

Das erfindungsgemäße Verfahren zum Verbessern einer Eigenschaft einer Komponente einer Windkraftanlage zeichnet sich dadurch aus, dass die Oberfläche zumindest teilweise mit einem Bor basierten Hartstoff beschichtet wird. Bei der Komponente kann es sich vorzugsweise um eine mechanische Komponente handeln. Zu den Vorteilen von Hartstoffschichten und insbesondere Bor basierten Hartstoffschichten wird auf die oben gemachten Ausführungen im Zusammenhang mit der erfindungsgemäßen Windkraftanlage verwiesen. Vorzugsweise kann die Oberfläche mit Borid beschichtet werden.

Mithilfe des erfindungsgemäßen Verfahren kann beispielsweise der Wirkungsgrad und/oder die Verschleißfestigkeit, insbesondere von Stoßflächen oder Lagerflächen, erhöht werden. Die erzielte Beschichtung kann zusätzlich zur Verschleißminimierung und Wirkungsgradsteigerung auch als Korrosionsschutz dienen.

Im Rahmen des erfindungsgemäßen Verfahrens kann die Oberfläche der Komponente lediglich teilweise, aber auch vollständig mit einem Bor basierten Hartstoff beschichtet werden. Die Oberfläche kann zum Beispiel durch Borieren oder physikalische Gasphasenabscheidung (physical vapor deposition, PVD) beschichtet werden. Beim Borieren kann insbesondere zunächst eine Bor reiche Substanz auf eine Oberfläche aufgetragen werden. Anschließend kann eine Wärmebehandlung durchgeführt werden.

Weiterhin kann die Oberfläche Stahl umfassen. Bei dem Stahl kann es sich um gehärteten oder ungehärteten Stahl handeln.

Der Hartstoff kann zumindest teilweise auf den Stahl aufgebracht werden.

Vorzugsweise kann die Oberfläche zumindest teilweise mit einem Bor basierten Hartstoff mit einer Schichtdicke zwischen 10 nm und 1000 *µ*m beschichtet werden. Vorteilhafterweise kann im Falle der physikalische Gasphasenabscheidung mit einer Schichtdicke zwischen 10 nm und 10 *µ*m und im Falle des Borierens mit einer Schichtdicke zwischen 100 *µ*m und 1000 *µ*m beschichtet werden.

Weitere Merkmale, Eigenschaften und Vorteile der vorliegenden Erfindung werden im Folgenden anhand eines Ausführungsbeispiels unter Bezugnahme auf die beigefügten Figuren näher erläutert.
- Figur 1: zeigt schematisch eine Windkraftanlage.
- Figur 2: zeigt schematisch einen Schnitt durch einen Teil einer Komponente einer Windkraftanlage.

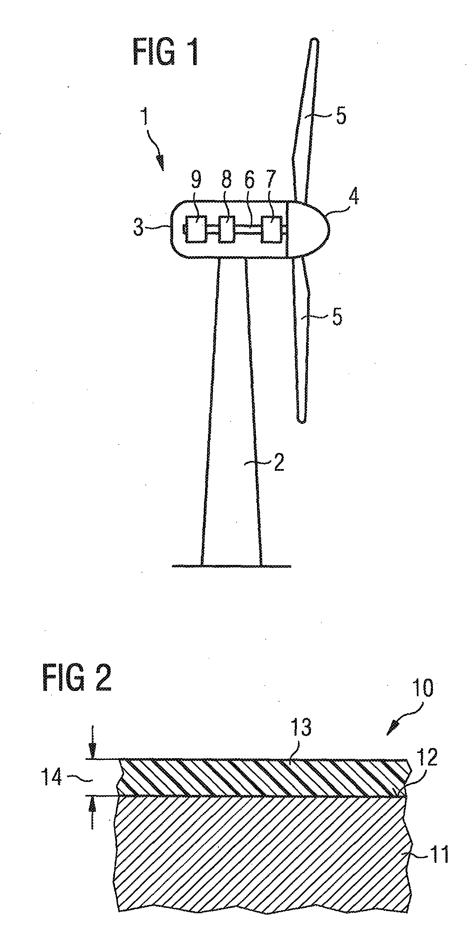

Im Folgenden wird ein Ausführungsbeispiel der Erfindung anhand der Figuren 1 und 2 näher erläutert. Die Figur 1 zeigt schematisch eine Windkraftanlage 1. Die Windkraftanlage 1 umfasst einen Turm 2, eine Gondel 3 und eine Rotornabe 4. Die Gondel 3 ist auf dem Turm 2 angeordnet. An der Gondel 3 ist die drehbar gelagerte Rotornabe 4 angeordnet. An der Rotornabe 4 ist mindestens ein Rotorblatt 5 befestigt.

Die Windkraftanlage 1 umfasst weiterhin mindestens eine Rotationsachse 6, ein Getriebe 7, eine Bremse 8 und einen Generator 9. Die Rotationsachse 6, das Getriebe 7, die Bremse 8 und der Generator 9 sind im Inneren der Gondel 3 angeordnet. Grundsätzlich ist im Getriebe 7 ein Achsabstand möglich. Verschiedene Komponenten können also unterschiedliche Rotationsachsen haben.

Die Figur 2 zeigt schematisch einen Schnitt durch einen Teil einer mechanischen Komponente 10 der Windkraftanlage 1. Bei der mechanischen Komponente 10 kann es sich zum Beispiel um den Turm 2, die Gondel, die Rotornabe 4, das Rotorblatt 5, das Getriebe 7, die Bremse 8, die Rotationsachse 6 oder den Generator .9 handeln. Bei der mechanischen Komponente 10 kann es sich ebenfalls um ein Element der zuvor genannten Komponenten handeln.

Die mechanische Komponente 10 umfasst im vorliegenden Ausführungsbeispiel gehärteten oder ungehärteten Stahl 11. Der Stahl 11 umfasst eine Oberfläche 12, die mit einer Hartstoffschicht 13 beschichtet ist. Es handelt sich bei der Hartstoffschicht um eine Bor basierte Hartstoffschicht.

Die Hartstoffschicht kann im Falle von gehärtetem Stahl zum Beispiel mit Hilfe von physikalischer Gasphasenabscheidung auf die Oberfläche 12 des Stahls 11 aufgebracht werden. Die Hartstoffschicht 13 hat eine Schichtdicke 14 zwischen 10 nm und 100 *µ*m. Vorzugsweise ist die Hartstoffschicht maximal einige *µ*m, insbesondere maximal 10 *µ*m, dick.

Die Bor basierte Hartstoffschicht kann im Falle von unhärtetem Stahl zum Beispiel durch Borieren auf die Oberfläche 12 des Stahls 11 aufgebracht werden. Dabei wird zunächst eine Bor reiche Substanz auf die Oberfläche 12 aufgebracht und anschließend einer Wärmebehandlung unterzogen. Die Hartstoffschicht 13 hat in diesem Fall eine Schichtdicke 14 zwischen 100 *µ*m und 1000 *µ*m.

## Patentansprüche

1. Windkraftanlage (1), die mindestens eine Komponente (10) mit einer Oberfläche (12) umfasst,
**dadurch gekennzeichnet, dass**
die Oberfläche (12) zumindest teilweise mit einer Bor basierten Hartstoffschicht (13) beschichtet ist,
wobei die Bor basierte Hartstoffschicht selbstschmierende Eigenschaften aufweist.

2. Windkraftanlage (1) nach Anspruch 1,
**dadurch gekennzeichnet, dass**
die Bor basierte Hartstoffschicht Borid umfasst.

3. Windkraftanlage (1) nach einem der Ansprüche 1 bis 2,
**dadurch gekennzeichnet, dass**
die Oberfläche (12) der Komponente (10) Stahl umfasst, wobei die Oberfläche (12) des Stahls zumindest teilweise mit der Hartstoffschicht (13) beschichtet ist.

4. Windkraftanlage (1) nach einem der Ansprüche 1 bis 3,
**dadurch gekennzeichnet, dass**
es sich bei der Komponente (10) um einen Turm (2), eine Gondel (3), einen Rotor, eine Rotornabe (4), ein Rotorblatt (5), ein Getriebe (7), ein Element eines Getriebes, eine Bremse (8), eine Rotationsachse (6) oder ein Element eines Generators (9) handelt.

5. Windkraftanlage (1) nach einem der Ansprüche 1 bis 4,
**dadurch gekennzeichnet, dass**
die Hartstoffschicht (13) eine Schichtdicke (14) zwischen 10nm und 1000µm aufweist.

6. Windkraftanlage (1) nach Anspruch 5,
**dadurch gekennzeichnet, dass**
die Hartstoffschicht (13) eine Schichtdicke (14) zwischen 10nm und 10µm oder zwischen 100 µm und 1000 µm aufweist.

7. Windpark der mindestens eine Windkraftanlage (1) nach einem der Ansprüche 1 bis 6 umfasst.

8. Verfahren zum Verbessern einer Eigenschaft einer Oberfläche (12) einer Komponente (10) einer Windkraftanlage (1),
**dadurch gekennzeichnet, dass**
die Oberfläche (12) zumindest teilweise mit einem Bor basierten Hartstoff (13) beschichtet wird,
wobei der Bor basierte Hartstoffselbstschmierende Eigenschaften aufweist.

9. Verfahren nach Anspruch8,
**dadurch gekennzeichnet, dass**
die Oberfläche (12) mit Borid beschichtet wird.

10. Verfahren nach einem der Ansprüche 8 bis 9,
**dadurch gekennzeichnet, dass**
die Oberfläche (12) durch Borieren oder durch physikalische Gasphasenabscheidung beschichtet wird.

11. Verfahren nach einem der Ansprüche 8 bis 10,
**dadurch gekennzeichnet, dass**
die Oberfläche (12) Stahl umfasst und der Hartstoff zumindest teilweise auf den Stahl aufgebracht wird.

12. Verfahren nach einem der Ansprüche 8 bis 11,
**dadurch gekennzeichnet, dass**
die Oberfläche (12) zumindest teilweise mit einem Hartstoff mit einer Schichtdicke (14) zwischen 10nm und 1000µm beschichtet wird.

## Claims

1. Wind turbine (1) comprising at least one component (10) having a surface (12),
**characterised in that**
the surface (12) is coated at least in part with a boron-based refractory layer (13),
wherein the boron-based refractory layer has self-lubricating properties.

2. Wind turbine (1) according to claim 1,
**characterised in that**
the boron-based refractory layer includes boride.

3. Wind turbine (1) according to one of claims 1 to 2,
**characterised in that**
the surface (12) of the component (10) includes steel, the surface (12) of the steel being coated at least in part with a refractory layer (13).

4. Wind turbine (1) according to one of claims 1 to 3,
**characterised in that**
the component (10) is a tower (2), a nacelle (3), a rotor, a rotor hub (4), a rotor blade (5), a gear mechanism (7), an element of a gear mechanism, a brake (8), a rotational axis (6) or an element of a generator (9).

5. Wind turbine (1) according to one of claims 1 to 4,
**characterised in that**
the refractory layer (13) has a layer thickness (14) of between 10nm and 1000µm.

6. Wind turbine (1) according to claim 5,
**characterised in that**
the refractory layer (13) has a layer thickness (14) of between 10nm and 10µm or between 100 µm and 1000 µm.

7. Wind farm comprising at least one wind turbine (1) according to one of claims 1 to 6.

8. Method for improving a property of a surface (12) of a component (10) of a wind turbine (1),
**characterised in that**
the surface (12) is coated at least in part with a boron-based refractory material (13),
wherein the boron-based refractory material has self-lubricating properties.

9. Method according to claim 8,
**characterised in that**
the surface (12) is coated with boride.

10. Method according to one of claims 8 to 9,
**characterised in that**
the surface (12) is coated by boronising or by physical vapour deposition.

11. Method according to one of claims 8 to 10,
**characterised in that**
the surface (12) includes steel and the refractory material is applied at least in part to the steel.

12. Method according to one of claims 8 to 11,
**characterised in that**
the surface (12) is coated at least in part with a refractory material having a layer thickness (14) of between 10nm and 1000µm.

## Revendications

1. Éolienne (1), qui comprend au moins un composant (10) doté d'une surface (12),
**caractérisée en ce que**
la surface (12) est revêtue au moins en partie d'une couche de matière dure (13) à base de bore,
la couche de matière dure à base de bore présentant des propriétés autolubrifiantes.

2. Éolienne (1) selon la revendication 1,
**caractérisée en ce que**
la couche de matière dure à base de bore comprend un borure.

3. Éolienne (1) selon l'une des revendications 1 à 2,
**caractérisée en ce que**
la surface (12) du composant (10) comprend de l'acier, la surface (12) de l'acier étant revêtue au moins en partie de la couche de matière dure (13).

4. Éolienne (1) selon l'une des revendications 1 à 3,
**caractérisée en ce que**
le composant (10) est une tour (2), une nacelle (3), un rotor, un moyeu de rotor (4), une pale de rotor (5), un engrenage (7), un élément d'un engrenage, un frein (8), un axe de rotation (6) ou un élément d'un générateur (9).

5. Éolienne (1) selon l'une des revendications 1 à 4,
**caractérisée en ce que**
la couche de matière dure (13) présente une épaisseur de couche (14) comprise entre 10 nm et 1000 µm.

6. Éolienne (1) selon la revendication 5,
**caractérisée en ce que**
la couche de matière dure (13) présente une épaisseur de couche (14) comprise entre 10 nm et 10 µm ou entre 100 µm et 1000 µm.

7. Parc éolien, qui comprend au moins une éolienne (1) selon l'une des revendications 1 à 6.

8. Procédé destiné à améliorer une propriété d'une surface (12) d'un composant (10) d'une éolienne (1),
**caractérisé en ce que**
la surface (12) est revêtue au moins en partie d'une matière dure (13) à base de bore,
la matière dure à base de bore présentant des propriétés autolubrifiantes.

9. Procédé selon la revendication 8,
**caractérisé en ce que**
la surface (12) est revêtue d'un borure.

10. Procédé selon l'une des revendications 8 à 9,
**caractérisé en ce que**
la surface (12) est revêtue par boruration ou par dépôt physique en phase vapeur.

11. Procédé selon l'une des revendications 8 à 10,
**caractérisé en ce que**
la surface (12) comprend de l'acier et **en ce que** la matière dure est appliqué au moins en partie sur l'acier.

12. Procédé selon l'une des revendications 8 à 11,
**caractérisé en ce que**
la surface (12) est revêtue au moins en partie d'une matière dure ayant une épaisseur de couche (14) comprise entre 10 nm et 1000 µm.
